# EUROPEAN PATENT SPECIFICATION

(11) **EP 1 864 574 B1**
(45) Date of publication and mention of the grant of the patent: **23.09.2015**
(21) Application number: 06730435.2
(22) Date of filing: 29.03.2006
(51) Int. Cl.: A01N 47/34, A01N 25/00, A01N 43/653, A01P 13/00

(54) **METHOD OF INHIBITING MYCOTOXIN GENERATION**
VERFAHREN ZUR HEMMUNG DER MYKOTOXINBILDUNG
PROCEDE D'INHIBITION DE LA GENERATION DE MYCOTOXINE

(30) Priority: 31.03.2005 JP 2005102646
(43) Date of publication of application: 12.12.2007
(73) Proprietor: NIPPON SODA CO., LTD., Chiyoda-ku, Tokyo 100-8165 (JP)
(72) Inventor: BUSCHHAUS, Herbert, 40210, Dusseldorf; (DE)
(74) Representative: D Young & Co LLP
(86) International application number: PCT/JP2006/306487
(87) International publication number: WO 2006/106742

(56) References cited:
- EP-A1- 0 522 393
- JP-A- 05 201 806
- JP-A- 2001 072 512
- JP-A- 2001 072 512
- JP-A- 2002 526 053
- JP-A- 2003 300 804
- EDWARDS S G: "Influence of agricultural practices on fusarium infection of cereals and subsequent contamination of grain by trichothecene mycotoxins", TOXICOLOGY LETTERS, ELSEVIER BIOMEDICAL PRESS, AMSTERDAM, NL, vol. 153, no. 1, 10 October 2004 (2004-10-10), pages 29-35, XP004549273, ISSN: 0378-4274, DOI: 10.1016/J.TOXLET.2004.04.022
- HASSAN AHMED HASAN: "Phytotoxicity of pathogenic fungi and their mycotoxins to cereal seedling viability", MYCOPATHOLOGIA, KLUWER ACADEMIC PUBLISHERS, DO, vol. 148, no. 3, 1 May 2000 (2000-05-01), pages 149-155, XP019259523, ISSN: 1573-0832
- SUSUMU UEDA ET AL: "Effect of thiophanate methyl on the incidence of scab and the mycotoxin contamination in wheat and barley.", JAPANESE JOURNAL OF PHYTOPATHOLOGY, vol. 54, no. 4, 1 January 1988 (1988-01-01), pages 476-482, XP55038910, ISSN: 0031-9473, DOI: 10.3186/jjphytopath.54.476
- JONES R K ET AL: "EVALUATION OF BENOMYL AND TRIAZOLE IN REDUCING AFLA TOXIN B-1 CONCENTRATIONS IN FIELD CORN ZEA-MAYS", PHYTOPATHOLOGY,, vol. 72, no. 7, 8 August 1982 (1982-08-08) , page 970, XP001538549, ISSN: 0031-949X
- GABAL ET AL: "Preliminary study on the use of thiabendazole in the control of common toxigenic fungi in grain feed", VETERINARY AND HUMAN TOXICOLOGY, MANHATTAN,MS, US, vol. 29, no. 3, 1 June 1987 (1987-06-01), pages 217-221, XP009133565, ISSN: 0145-6296
- CHALA A ET AL: "An integrated approach to the evaluation of the efficacy of fungicides against fusarium culmorum, the cause of head blight of wheat", JOURNAL OF PHYTOPATHOLOGY - PHYTOPATHOLOGISCHE ZEITSCHRIFT, WILEY-BLACKWELL VERLAG GMBH, DE, vol. 151, 1 January 2003 (2003-01-01), pages 673-678, XP002357495, ISSN: 0931-1785, DOI: 10.1046/J.1439-0434.2003.00787.X
- EDWARDS S G ET AL: "QUANTIFICATION OF TRICHOTHECENE-PRODUCING FUSARIUM SPECIES IN HARVESTED GRAIN BY COMPETITIVE PCR TO DETERMINE EFFICACIES OF FUNGICIDES AGAINST FUSARIUM HEAD BLIGHT OF WINTER WHEAT", APPLIED AND ENVIRONMENTAL MICROBIOLOGY, AMERICAN SOCIETY FOR MICROBIOLOGY, US, vol. 67, no. 4, 1 April 2001 (2001-04-01), pages 1575-1580, XP001076826, ISSN: 0099-2240, DOI: 10.1128/AEM.67.4.1575-1580.2001
- FELIX D'MELLO J P ET AL: "Pesticide use and mycotoxin production in Fusarium and Aspergillus phytopathogens", EUROPEAN JOURNAL OF PLANT PATHOLOGY, KLUWER ACADEMIC PUBLISHERS, DO, vol. 104, 1 January 1998 (1998-01-01), pages 741-751, XP002494161, ISSN: 1573-8469, DOI: 10.1023/A:1008621505708

## Description

### TECHNICAL FIELD

The present invention relates to a method for inhibiting mycotoxin production in fungi. More specifically, the present invention relates to a method for inhibiting mycotoxin production in fungi wherein the mycotoxin content in harvested crops is reduced without a correlation with a control effect against fungi by spraying a benzimidazole-type fungicidal compound, selected from a group consisting of benomyl, carbendazine, fubendazole, cypendazole, thiophanate-methyl and thiophanate as an active ingredient, onto food crops.

### BACKGROUND ART

Mycotoxin, which is formed by fungi, is known to have serious effects on the health of humans and animals as follows: developing symptoms of poisoning such as diarrhea or nausea, causing cancer, and having the possibility to trigger premature births or abortion. Therefore, it has been a long-standing task to find how to inhibit mycotoxin production in fungi which infect food crops. Particularly, a problem has arisen recently in that infection of food crops with fungi during their growth cycle causes exposure of the harvested crops to mycotoxin, with the result that the harvested crops can not be provided as food.

In order to prevent the aforementioned problem, some measures have been taken: improving growth conditions of plants, avoiding crop rotation, improving strain, and transforming plants so as to provide resistance to mycotoxin (see, for example patent documents 1 and 2). In addition, various types of fungicide are applied to food crops to prevent them from becoming infected with fungi.

[Patent Document 1] WO 0060061, JP 2002-540787.

[Patent Document 2] 9958659, JP 2002-533057.

A significant decrease in levels of trichothecene mycotoxins, as well as control of the fungal disease scab in wheat and barley, using the benzimidazole-type fungicide, thiophanate-methyl was described by S. Ueda and T. Yoshizawa in Annals of the Phytopathological Society of Japan, 1988, 54, 476-482. Although contamination of grains may be controlled by fungicides, it has been reported that control of Fusarium Head Blight with fungicides cannot be assumed to result in a corresponding reduction in mycotoxins and that using some fungicides at sub-lethal concentrations stimulates mycotoxin production (S.G. Edwards, Toxicology Letters 2004, 153, 29-35)

### DISCLOSURE OF THE INVENTION

The task of the present invention is to provide a method for inhibiting mycotoxin production prominently, since mycotoxin is formed by fungi and it has serious effects on the health of humans and other animals.

The present inventor found that a benzimidazole-type fungicidal compound selected from a group consisting of benomyl, carbendazine, fubendazole, cypendazole, thiophanate-methyl and thiophanate, inhibits mycotoxin production in harvested crops without a correlation with the fungicidal effect in the process of spraying the fungicides onto food crops.

The present invention relates to (1) a method for inhibiting mycotoxin production, wherein the mycotoxin content in harvested crops is reduced by spraying a fungicide containing a benzimidazole-type fungicidal compound, selected from a group consisting of benomyl, carbendazine, fubendazole, cypendazole, thiophanate-methyl and thiophanate as an active ingredient, and wherein the mycotoxin content in the harvested crops is reduced without a correlation with a control effect against fungi.
(2) the method for inhibiting mycotoxin production according to (1),
   wherein the fungicide is an admixture containing the benzimidazole-type fungicide and any one of the following: a sterol biosynthesis inhibitor, selected from a group consisting of tebuconazole, triadimefon, triadimenol, bitertanol, myclobutanil, hexaconazole, propiconazole, triflumizole, prochloraz, pefurazoate, fenarimol, pyrifenox, triforine, flusilazole, ethaconazole, dichlobutrazol, fluotrimazol, flutriafen, penconazole, diniconazole, imizailil, tridemorph, fenpropimorph, buthiobate, epoxiconazole, metoconazole, fluquinconazole, prochloraz and prothioconazole,
   a strobilurin-type agent, selected from a group consisting of kresoxim-methyl, azoxystrobin, metominostrobin, trifloxystrobin and pyraclostrobin, and a
   guanidine-type fungicide; selected from a group consisting of iminoctadine acetate and iminoctadine albesilate;
(3) the method for inhibiting mycotoxin production according to (1) or (2),
   wherein the benzimidazole-typle fungicide is a thiophamate-methyl agent; and (4) the method for inhibiting mycotoxin production according to any one of (1) to (3),
   wherein the food crop is wheat or barley.

The present invention further relates to the use of the benzimidazole-type fungicide, selected from a group consisting of benomyl, carbendazine, fubendazole, cypendazole, thiophanate-methyl and thiophanate as an active ingredient for inhibition of mycotoxin production in harvested crops, wherein mycotoxin content in harvested crops is reduced without a correlation with a control effect against fungi by spraying the fungicide containing the benzimidazole-type fungicidal compound as an active ingredient onto food crops.

Production of mycotoxin, which is a harmful substance formed by fungi, is inhibited using the present method, leading to provision of extremely safe crops, even if fungi control is incomplete.

### BRIEF DESCRIPTION OF THE DRAWINGS

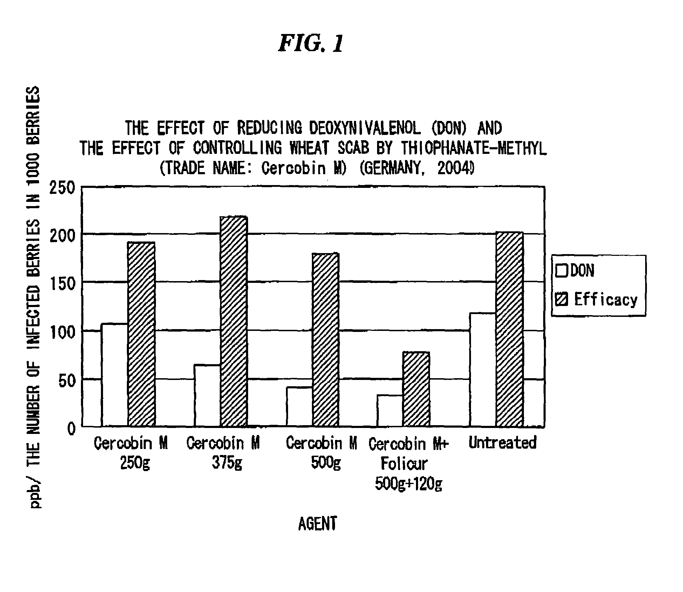

FIG.1 The effect of controlling wheat scab brought about by spraying thiophanate-methyl (trade name: Cercobin M), and the result of measuring the content of deoxinivalenol (DON), which is a mycotoxin.

### BEST MODE FOR CARRYING OUT THE INVENTION

The present method reduces the mycotoxin content in harvested crops without a correlation with the control effect against fungi by spraying the benzimidazole-type fungicide onto food crops. Mycotocin is a harmful substance formed by fungi, and trichothecene, ergoalkaloid, fumonisin, zearalenone, ochratoxin mycotoxins can be specifically exemplified. Among them, deoxynivalenol (DON), one type of trichothecene can be preferably exemplified, whose contamination of grain has emerged as a particular problem.

Mycotoxin is usually formed by fungi which infect food crops, specifically by fusarium, penicillum and aspergillus. Hence, a problem has arisen that mycotoxin contaminates wheat and barley due to wheat scab (fusarium). Meanwhile, the mycotoxin content in harvested crops can be quantified using an ELISA method, HPLC method, gas chromatography method and the like.

As for the aforementioned benzimidazole-type fungicide, benomyl, carbendazine, fubendazole, cypendazole, thiophanate-methyl, or thiophanate is used, among these a thiophanate-methyl agent (trade names: Topsin M, Cercobin M) is preferred. These benzimidazole-type fungicides can be used as a single agent or in combination of two or more agents. The used benzimidazole-type fungicide can be applied not only in pure form without adding other constituents in actual use, but also in a form that can be used as a general agrichemical, i.e. a water-dispersible powder, particle, powder, suspension, granulated water-dispersible powder, for the purpose of its use as an agrichemical.

As for the aforementioned sterol biosynthesis inhibitor (SBI), the following can be specifically exemplified; tebuconazole, triadimefon, triadimenol, bitertanol, myclobutanil, hexaconazole, propiconazole, triflumizole, prochloraz, pefurazoate, fenarimol, pyrifenox, triforine, flusilazole, ethaconazole, dichlobutrazol, fluotrimazol, flutriafen, penconazole, diniconazole, imazalil, tridemorph, fenpropimorph, buthiobate, epoxiconazole, metoconazole, fluquinconazole, prochloraz and protioconazol, while tebuconazole can preferably be exemplified among these. Concomitant use of one or more of these SBI agents and the benzimidazole-type fungicide can enhance the inhibitory action of the benzimidazole-type fungicide against mycotoxin production.

In addition, the benzimidazole-type fungicide can be used as a single agent; it can be used concomitantly with one or more of the other agrichemicals such as various fungicides, pesticides, acaricides, nematicides, and plant growth regulators, as well as being used concomitantly with SBI agents as described above. Further, concomitant use of the benzimidazole-type fungicidal compound and a strobilurin-type compound, or concomitant use of the benzimidazole-type fungicidal compound and a guanidine-type fungicide can advantageously inhibit mycotoxin production.

As for the aforementioned fungicide, the following can be specifically exemplified: copper fungicide such as basic copper chloride and basic copper sulfate, sulfur fungicide such as thiuram, zineb, maneb, mancozeb, ziram, propineb, and polycarbamate, polyhaloalkylthio fungicide such as captan, folpet, dichlorfluanid, organochlorine fungicide such as chlorothalonil, fthalide, organophosphorous fungicide such as IBP, EDDP, tolclophos-methyl, pyrazophos, fosetyl, dicarboxyimide fungicide such as iprodione, procymidone, vinclozolin, fluoromide, carboxyamide fungicide such as oxycarboxin, mepronil, flutolanil, tecloftalam, trichlamide, pencycuron, acylalanine fungicide such as metalaxyl, oxadixyl, furalaxyl, methoxyacrylate fungicide such as kresoxim-methyl (stroby), azoxystrobin, metominostrobin, trifloxystrobin, pyraclostrobin, anilinopyrimidine fungicide such as andupurine, mepanipyrim, pyrimethanil, cyprodinil, antibiotic agents such as polyoxin, blasticidin S, kasugamycin, validamycine, dihydrostreptomycin sulfate.

Other than those above, the following fungicides can be used concomitantly; propamocarb hydrochloride, quintozene, hydroxyisoxazole, methasulfocarb, anilazine, isoprothiolane, probenazole, chinomethionat, dithianon, dinocap, diclomezine, ferimzone, fluazinam, pyroquilon, tricyclazole, oxolinic acid, iminoctadine acetate, iminoctadine albesilate, cymoxanil, pyrrolnitrin, diethofencarb, binapacryl, lecithin, sodium bicarbonate, fenaminosulf, dodine, dimethomorph, phenazine oxide, carpropamid, flusulfamide, fludioxonil and famoxadone.

As for the aforementioned pesticides, the following can be exemplified: organophosphorous pesiticides and carbamate pesticides such as fenthion, fenitrothion, diazinon, chlorpyrifos, ESP, vamidothion, phenthoate, dimethoate, formothion, malathon, trichlorfon, thiometon, phosmet, dichlorvos, acephate, EPBP, methylparathion, oxydemeton-methyl, ethion, salithion, cyanophos, isoxathion, pyridaphenthion, phosalone, methidathion, sulprofos, chlorfevinphos, tetrachlorvinphos, dimethylvinphos, propaphos, isofenphos, ethylthiometon, profenofos, pyraclofos, monocrotophos, azinphosmethyl, aldicarb, methomyl, thiodicarb, carbofuran, carbosulfan, benfuracarb, furathiocarb, propoxur, BPMC, MTMC, MIPC, carbaryl, pirimicarb, ethiofencarb, and fenoxycarb, pyrethroid pesticides such as permethrin, cypermethrin, deltamethrin, fenvalerate, fenpropathrin, pyrethrin, allethrin, tetramethrin, resmethrin, dimethrin, propathrin, phenothrin, prothrin, fluvalinate, cyfluthrin, cyhalothrin, flucythrinate, ethofenprox, cycloprothrin, tralomethrin, silafluofen, brofenprox, and acrinathrin, and benzoylurea and other types of pesticides such as diflubenzuron, chlorfluazuron, hexaflumuron, triflumuron, tetrabenzuron, flufenoxuron, flucycloxuron, buprofezin, pyriproxyfen, methoprene, benzoepin, diafenthiuron, acetamiprid, imidacloprid, nitenpyram, fipronil, cartap, thiocyclam, bensultap, nicotin sulfate, rotenone, mataldehyde, machine oil, and microbial pesticides e.g. BT and insect pathogenic virus.

As for the aforementioned acricides, the following can be specifically exemplified: chlorbenzilate, phenisobromolate, dicofol, amitraz, BPPS, benzomate, hexythiazox, fenbutatin oxide, polynactin, chinomethionat, CPCBS, tetradifon, avermectin, milbemectin, clofentezin, cyhexatin, pyridaben, fenpyroximate, tebufenpyrad, pylidimifen, fenothiocarb, and dienochlor. As for the aforementioned nematicides, fenamiphos, fosthiazate and the like can be specifically exemplified; as for plant-growth regulators, gibberellins (ex. gibberellin A3, gibberellin A4, and gibberellin A7), IAA, NAA, and so on can be specifically exemplified.

In the method of the present invention, when the benzimidazole-type fungicide and the other type of fungicide are mixed together and used, the mixture ratio of the benzimidazole-type fungicide and the other type of fungicide can vary extensively, while it ranges from 1:0,001 to 1:1000 usually, preferably it ranges from 1:0.01 to 1:100 as a weight ratio.

As for the aforementioned food crops and crops, cereals, preferably Gramineae, more preferably, wheat or barley can be exemplified. Wheat, barley, rye, oats and triticale can be specifically exemplified.

The time of spraying the benzimidazole-type fungicide onto food crops depends on the types of food crops onto which the fungicides are applied and the types of disease being treated. For instance, when the benzimidazole-type fungicide is applied to wheat scab, spraying it not only in control time (GSs 49-52) but also in GS 53 to harvest time, particularly preferably spraying it at approximately the anthesis stage (GSs 60-71) can inhibit mycotoxin production effectively. Here, GS stands for growth stage of plants, which is applied by designation in the BBCH method in agriculture, representing the growth stage by a two-digit decimal system (two-digit code) from 00 to 99. This BBCH method was originally developed as a result of cooperation between public and private test and research organizations in Europe, and can be applied to all crops and weeds, and currently the extended BBCH method (The extended BBCH method, 1992, 2nd, ed. 1997) has spread to Europe and Canada mainly (see, Shokucho, vol.36, No.2, pp.11-20). The aforementioned GSs are in accordance with "the extended BBCH scale (general)" on page 20 of "Shokucho".

In the method of the present invention, the amount of application of the benzimidazole-type fungicide depends on its mixture ratio with the other fungicide, weather conditions, preparation conditions, application method, location and so on, while the amount of active component usually varies from 1 to 10000 g, preferably 10 to 1000 g per 1 hectare.

The present invention includes the use of the benzimidazole-type fungicidal compound selected from a group consisting of benomyl, carbendazine, fubendazole, cypendazole, thiophanate-methyl and thiophanate as an active ingredient, to reduce the mycotoxin content in harvested crops, wherein mycotoxin content in the harvested crops is reduced without a correlation with a control effect against fungi, by spraying the fungicide containing the benzimidazole-type fungicidal compound as an active ingredient onto food crops.

The effectiveness of the present invention will be described by referring to the following Example, however, the present invention is not limited to this Example.

### (Example)

Berries of infected wheat (variety: Bandit) containing Fusarium graminearum, Fusarium culmorum, or Fusarium avenaceum were seeded as sources of inoculums of wheat scab on a farm field, When the wheat had grown to approximately anthesis stage (GSs 65 to 71), 250 g ai/ha, 375 g ai/ha, and 500 g ai/ha of the diluted thiophanate-methyl (trade name: Cercobin M) suspensions were sprayed once. Further, 500 g ai/ha of thiophanate-methyl (trade name: Cercobin M) and 120 g ai/ha of tebuconazole (trade name: Folicur) were sprayed concomitantly (wherein, ai in ai/ha is an abbreviation of "active ingredient", representing "in an active ingredient per se" or "in conversion into ingredient"). The wheat berries were sampled at harvest, the number of infected berries in 1000 berries (medicinal benefit) was studied. The quantitative analysis of deoxynivalenol (DON) was performed with an ELISA test kit from R-Biopharm AG in Germany. The results are shown in Table 1 and Figure 1.

**Table 1**

| The relationship between DON content and medicinal benefit of Cercobin M (trade name): | | | | |
|---|---|---|---|---|
| Agent | g ai/ha | DON (ppb) | Medicinal Benefit* | Medicinal Benefit Control Value |
| 1 Cercobin M | 250 | 106.4 | 190 | 6.4% |
| 2 Cercobin M | 375 | 63.8 | 218 | 7.4% |
| 3 Cercobin M | 500 | 40.2 | 180 | 11.3% |
| 4 Cercobin M + Folicur | 500 + 120 | 32.7 | 78 | 61.6% |
| 5 No treatment | - | 117.1 | 203 | - |

| | | | | |
|---|---|---|---|---|
| Cercobin M: thiophanate-methyl Folicur: tebuconazole DON: deoxynivalenol *Effect of controlling wheat scab: the number of infected berries in 1000 berries | | | | |

From Table 1 and Figure 1, it was found that there was almost no difference in medicinal benefit (the number of infected berries in 1000 berries) between the case treated with thiophanate-methyl and the case with no treatment, while the amount of mycotoxin production (DON concentration) was inhibited in a dose-dependent manner.

That is, there was no correlation observed between the effect of controlling wheat scab by thiophanate-methyl and the DON lowering effect. On the other hand, when thiophanate-methyl and tebuconazole were used concomitantly, an effect of lowering the mycotoxin production-amount (DON concentration) was observed as well as an effect of controlling wheat scab.

## Claims

1. A method for inhibiting mycotoxin production, wherein mycotoxin content in harvested crops is reduced by spraying a fungicide containing a benzimidazole-type fungicidal compound selected from a group consisting of benomyl, carbendazine, fubendazole, cypendazole, thiophanate-methyl and thiophanate as an active ingredient onto food crops, wherein the mycotoxin content in harvested crops is reduced without a correlation with a control effect against fungi by spraying the fungicide containing the benzimidazole-type fungicidal compound as an active ingredient onto food crops.

2. The method for inhibiting mycotoxin production according to claim 1, wherein the fungicide is sprayed onto food crops during the period from their anthesis stage until their harvest.

3. The method for inhibiting mycotoxin production according to claim 1, wherein the fungicide is an admixture containing the benzimidazole-type fungicide and any one of the following: a sterol biosynthesis inhibitor, selected from a group consisting of tebuconazole, triadimefon, triadimenol, bitertanol, myclobutanil, hexaconazole, propiconazole, triflumizole, prochloraz, pefurazoate, fenarimol, pyrifenox, triforine, flusilazole, ethaconazole, dichlobutrazol, fluotrimazol, flutriafen, penconazole, diniconazole, imizailil, tridemorph, fenpropimorph, buthiobate, epoxiconazole, metoconazole, fluquinconazole, prochloraz and protioconazol, a strobilurin-type agent selected from a group consisting of kresoxim-methyl, azoxystrobin, metominostrobin, trifloxystrobin and pyraclostrobin, and a guanidine-type fungicide selected from a group consisting of iminoctadine acetate and iminoctadine albesilate.

4. The method for inhibiting mycotoxin production according to any one of claims 1 to 3, wherein the benzimidazole-type fungicide is a thiophanate-methyl agent.

5. The method for inhibiting mycotoxin production according to any one of claims 1 to 4, wherein the food crop is selected from a group consisting of wheat, barley, rye, oats and triticale.

6. Use of a fungicide containing a benzimidazole-type fungicidal compound selected from a group consisting of benomyl, carbendazine, fubendazole, cypendazole, thiophanate-methyl and thiophanate as an active ingredient for inhibition of mycotoxin production in harvested crops, wherein mycotoxin content in harvested crops is reduced without a correlation with a control effect against fungi by spraying the fungicide containing the benzimidazole-type fungicidal compound as an active ingredient onto food crops.

7. The use according to claim 6, wherein the fungicide is an admixture containing the benzimidazole-type fungicide and any one of the following: a sterol biosynthesis inhibitor selected from a group consisting of tebuconazole, triadimefon, triadimenol, bitertanol, myclobutanil, hexaconazole, propiconazole, triflumizole, prochloraz, pefurazoate, fenarimol, pyrifenox, triforine, flusilazole, ethaconazole, dichlobutrazol, fluotrimazol, flutriafen, penconazole, diniconazole, imazalil, tridemorph, fenpropimorph, buthiobate, epoxiconazole, metoconazole, fluquinconazole, prochloraz and protioconazol, a strobilurin-type agent selected from a group consisting of kresoxim-methyl, azoxystrobin, metominostrobin, trifloxystrobin and pyraclostrobin, and a guanidine-type fungicide selected from a group consisting of iminoctadine acetate and iminoctadine albesilate.

8. The use according to claim 6 or 7, wherein the benzimidazole-type fungicide is a thiophanate-methyl agent.

9. The use according to any one of claims 6 to 8, wherein the crop is selected from a group consisting of wheat, barley, rye, oats and triticale.

10. Use of the benzimidazole-type fungicide selected from a group consisting of benomyl, carbendazine, fubendazole, cypendazole, thiophanate-methyl and thiophanate for reducing mycotoxin content in harvested crops, wherein the mycotoxin content in harvested crops is reduced without a correlation with a control effect against fungi by spraying a fungicide containing the benzimidazole-type fungicide as an active ingredient onto food crops.

## Patentansprüche

1. Verfahren zum Hemmen der Mycotoxinproduktion, wobei der Mycotoxingehalt in geerntetem Erntegut dadurch reduziert wird, dass man Nahrungsmittelkulturen mit einem Fungizid spritzt, das eine fungizide Verbindung des Benzimidazoltyps, ausgewählt aus der Gruppe bestehend aus Benomyl, Carbendazin, Fubendazol, Cypendazol, Thiophanat-methyl und Thiophanat als Wirkstoff enthält, wobei der Mycotoxingehalt in geerntetem Erntegut ohne Korrelation mit einer Bekämpfungswirkung gegen Pilze durch Spritzen von Nahrungsmittelkulturen mit dem Fungizid, das die fungizide Verbindung des Benzimidazoltyps als Wirkstoff enthält, reduziert wird.

2. Verfahren zum Hemmen der Mycotoxinproduktion nach Anspruch 1, wobei Nahrungsmittelkulturen während des Zeitraums ihres Blütestadiums bis zu ihrer Ernte mit dem Fungizid gespritzt werden.

3. Verfahren zum Hemmen der Mycotoxinproduktion nach Anspruch 1, wobei es sich bei dem Fungizid um eine Mischung handelt, die das Fungizid des Benzimidazoltyps und eine beliebige der folgenden Substanzen enthält: einen Sterolbiosynthesehemmer, ausgewählt aus Tebuconazol, Triadimefon, Triadimenol, Bitertanol, Myclobutanil, Hexaconazol, Propiconazol, Triflumizol, Prochloraz, Pefurazoat, Fenarimol, Pyrifenox, Triforin, Flusilazol, Ethaconazol, Dichlobutrazol, Fluotrimazol, Flutriafen, Penconazol, Diniconazol, Imizalil, Tridemorph, Fenpropimorph, Buthiobat, Epoxiconazol, Metoconazol, Fluquinconazol, Prochloraz und Protioconazol, ein Agens des Strobilurintyps, ausgewählt aus einer Gruppe bestehend aus Kresoxim-methyl, Azoxystrobin, Metominostrobin, Trifloxystrobin und Pyraclostrobin, und einem Fungizid des Guanidintyps, ausgewählt aus einer Gruppe bestehend aus Iminoctadin-acetat und Iminoctadin-Albesilat.

4. Verfahren zum Hemmen der Mycotoxinproduktion nach einem der Ansprüche 1 bis 3, wobei es sich bei dem Fungizid des Benzimidazoltyps um ein Thiophanat-methyl-Agens handelt.

5. Verfahren zum Hemmen der Mycotoxinproduktion nach einem der Ansprüche 1 bis 4, wobei die Nahrungsmittelkultur aus einer Gruppe bestehend aus Weizen, Gerste, Roggen, Hafer und Triticale ausgewählt ist.

6. Verwendung eines Fungizids, das eine fungizide Verbindung des Benzimidazoltyps, ausgewählt aus einer Gruppe bestehend aus Benomyl, Carbendazin, Fubendazol, Cypendazol, Thiophanat-methyl und Thiophanat, als Wirkstoff enthält, zum Hemmen der Mycotoxinproduktion in geerntetem Erntegut, wobei der Mycotoxingehalt in geerntetem Erntegut ohne Korrelation mit einer Bekämpfungswirkung gegen Pilze durch Spritzen von Nahrungsmittelkulturen mit dem Fungizid, das die fungizide Verbindung des Benzimidazoltyps als Wirkstoff enthält, reduziert wird.

7. Verwendung nach Anspruch 6, wobei es sich bei dem Fungizid um eine Mischung handelt, die das Fungizid des Benzimidazoltyps und eine beliebige der folgenden Substanzen enthält: einen Sterolbiosynthesehemmer, ausgewählt aus Tebuconazol, Triadimefon, Triadimenol, Bitertanol, Myclobutanil, Hexaconazol, Propiconazol, Triflumizol, Prochloraz, Pefurazoat, Fenarimol, Pyrifenox, Triforin, Flusilazol, Ethaconazol, Dichlobutrazol, Fluotrimazol, Flutriafen, Penconazol, Diniconazol, Imazalil, Tridemorph, Fenpropimorph, Buthiobat, Epoxiconazol, Metoconazol, Fluquinconazol, Prochloraz und Protioconazol, ein Agens des Strobilurintyps, ausgewählt aus einer Gruppe bestehend aus Kresoxim-methyl, Azoxystrobin, Metominostrobin, Trifloxystrobin und Pyraclostrobin, und einem Fungizid des Guanidintyps, ausgewählt aus einer Gruppe bestehend aus Iminoctadin-acetat und Iminoctadin-Albesilat.

8. Verwendung nach Anspruch 6 oder 7, wobei es sich bei dem Fungizid des Benzimidazoltyps um ein Thiophanat-methyl-Agens handelt.

9. Verwendung nach einem der Ansprüche 6 bis 8, wobei die Nahrungsmittelkultur aus einer Gruppe bestehend aus Weizen, Gerste, Roggen, Hafer und Triticale ausgewählt ist.

10. Verwendung des Fungizids des Benzimidazoltyps, ausgewählt aus einer Gruppe bestehend aus Benomyl, Carbendazin, Fubendazol, Cypendazol, Thiophanat-methyl und Thiophanat, zum Reduzieren des Mycotoxingehalts in geerntetem Erntegut, wobei der Mycotoxingehalt in geerntetem Erntegut ohne Korrelation mit einer Bekämpfungswirkung gegen Pilze durch Spritzen von Nahrungsmittelkulturen mit dem Fungizid, das das Fungizid des Benzimidazoltyps als Wirkstoff enthält, reduziert wird.

## Revendications

1. Procédé d'inhibition de production de mycotoxine, dans lequel la teneur en mycotoxine dans des cultures récoltées est réduite par pulvérisation d'un fongicide contenant un composé fongicide de type benzimidazole choisi dans un groupe constitué des bénomyl, carbendazine, fubendazole, cypendazole, thiophanate-méthyl et thiophanate en tant que substance active sur des cultures alimentaires, dans lequel la teneur en mycotoxine dans les cultures récoltées est réduite sans corrélation avec un effet de contrôle contre les champignons par pulvérisation du fongicide contenant le composé fongicide de type benzimidazole en tant que substance active sur des cultures alimentaires.

2. Procédé d'inhibition de production de mycotoxine selon la revendication 1, dans lequel le fongicide est pulvérisé sur des cultures alimentaires pendant la période de leur stade d'anthèse jusqu'à leur récolte.

3. Procédé d'inhibition de la production de mycotoxine selon la revendication 1, dans lequel le fongicide est un mélange contenant le fongicide de type benzimidazole et l'un quelconque des suivants : un inhibiteur de biosynthèse de stérol, choisi dans un groupe constitué des tébuconazole, triadiméfon, triadiménol, bitertanol, myclobutanil, hexaconazole, propiconazole, triflumizole, prochloraz, péfurazoate, fénarimol, pyrifénox, triforine, flusilazole, éthaconazole, dichlobutrazol, fluotrimazol, flutriafen, penconazole, diniconazole, imizailil, tridémorph, fenpropimorph, buthiobate, époxiconazole, métoconazole, fluquinconazole, prochloraz et protioconazol, un agent de type strobilurine choisi dans un groupe constitué des krésoxim-méthyle, azoxystrobine, métominostrobine, trifloxystrobine et pyraclostrobine, et un fongicide de type guanidine choisi dans un groupe constitué de l'acétate d'iminoctadine et l'albésilate d'iminoctadine.

4. Procédé d'inhibition de la production de mycotoxine selon l'une quelconque des revendications 1 à 3, dans lequel le benzimidazole-type fongicide est un agent de thiophanate-méthyl.

5. Procédé d'inhibition de la production de mycotoxine selon l'une quelconque des revendications 1 à 4, dans lequel la culture alimentaire est choisie dans un groupe constitué du blé, de l'orge, du seigle, de l'avoine et de la triticale.

6. Utilisation d'un fongicide contenant un composé fongicide de type benzimidazole choisi dans un groupe constitué des bénomyl, carbendazine, fubendazole, cypendazole, thiophanate-méthyl et thiophanate en tant que substance active pour l'inhibition de la production de mycotoxine dans des cultures récoltées, dans laquelle
la teneur en mycotoxine dans les cultures récoltées est réduite sans corrélation avec un effet de contrôle contre des champignons par pulvérisation du fongicide contenant le composé fongicide de type benzimidazole en tant que substance active sur des cultures alimentaires.

7. Utilisation selon la revendication 6, dans laquelle le fongicide est un mélange contenant le fongicide de type benzimidazole et l'un quelconque des suivants : un inhibiteur de biosynthèse de stérol choisi dans un groupe constitué des tébuconazole, triadiméfon, triadiménol, bitertanol, myclobutanil, hexaconazole, propiconazole, triflumizole, prochloraz, péfurazoate, fénarimol, pyrifénox, triforine, flusilazole, éthaconazole, dichlobutrazol, fluotrimazol, flutriafen, penconazole, diniconazole, imazalil, tridémorph, fenpropimorph, buthiobate, époxiconazole, métoconazole, fluquinconazole, prochloraz et protioconazol, un agent de type strobilurine choisi dans un groupe constitué des krésoxim-méthyl, azoxystrobine, métominostrobine, trifloxystrobine et pyraclostrobine, et un fongicide de type guanidine choisi dans un groupe constitué de l'acétate d'iminoctadine et l'albésilate d'iminoctadine.

8. Utilisation selon la revendication 6 ou 7, dans laquelle le fongicide de type benzimidazole est un agent de thiophanate-méthyl.

9. Utilisation selon l'une quelconque des revendications 6 à 8, dans laquelle la culture est choisie dans un groupe constitué du blé, de l'orge, du seigle, de l'avoine et de la triticale.

10. Utilisation du fongicide de type benzimidazole choisi dans un groupe constitué des bénomyle, carbendazine, fubendazole, cypendazole, thiophanate-méthyl et thiophanate pour diminuer la teneur en mycotoxine dans des cultures récoltées, dans laquelle la teneur en mycotoxine dans les cultures récoltées est réduite sans corrélation avec un effet de contrôle contre les champignons par pulvérisation d'un fongicide contenant le fongicide de type en tant que substance active sur des cultures alimentaires.
